# EUROPEAN PATENT APPLICATION

(11) **EP 2 773 053 A1**
(43) Date of publication of application: **03.09.2014**
(21) Application number: 14156700.8
(22) Date of filing: 26.02.2014
(51) Int. Cl.: H04H 20/42, H04H 20/78, H04H 60/85, H04H 60/86

(54) **Hybrid cable-wireless system**

(30) Priority: 27.02.2013 US 201313778742
(71) Applicant: Rogers Communications Inc., Toronto, Ontario M4W 1G9 (CA)
(72) Inventor: Hart, George Maynard, Brampton, Ontario L6T 0C1 (CA); O'Leary, Edward A., Toronto, Ontario M4W 1G9 (CA); Kuarsingh, Victor, Brampton, Ontario L6T 0C1 (CA)
(74) Representative: Pecher, Nicolas

(57) **Abstract**

Disclosed are methods and system for managing transmission of data between a hub and a receiver, the hub connected to the receiver by a first transport medium, and the hub connected to the receiver by a wireless network, the method comprising receiving a request from the receiver to transmit data upstream; determining that the data transmission across the first transport medium is congested; and, in response to determining that the data transmission across the first transport medium congested, instructing the receiver to transmit data upstream on the wireless network.

## Description

### TECHNICAL FIELD

The present disclosure relates to communication systems and, more particularly, to hybrid communication systems.

### BACKGROUND

Communication systems, such cable (or wired) broadband networks, wireless broadband networks and WiFi networks often allow for downstream data transmissions. For example, a communication system may provide for content, such as video or voice data, to be transmitted from a head end system operated by a service provider to one or more receivers operating within the communication system.

Similarly, such communication systems may allow for upstream data transmission. For example, a communication system may provide for content to be transmitted from a receiver to the head end system.

Such communication systems often have a limited amount of capacity, expressed as bandwidth, over which content may be delivered. For example, wireless broadband networks may be required to deliver signals within a specific limited portion of the wireless spectrum. Similarly, wired broadband networks, such as a cable network, operate over a wired transport medium which has limited bandwidth.

The availability of bandwidth for content transmission may be further limited where service providers act as Multiple Video Programming Distributors (MVPDs), providing multiple types of services over common signal transport mediums. For example, service providers may operate a voice communication service and/or an Internet service over a transport medium (such as a network of cables) which they also use for communication system services (such as television delivery services). Each of these services may require bandwidth in the shared transport medium, thus reducing the availability of bandwidth for each service within that transport medium.

Adding additional bandwidth to existing communication systems may be a difficult and costly endeavor. For example, in order to add additional bandwidth to a cable television system, it may be necessary to expand existing infrastructure by laying new cables.

### BRIEF DESCRIPTION OF THE DRAWINGS

FIG. 1 is a block diagram of an exemplary communication system.
FIG. 2 is a block diagram of a hub, hybrid modem and wireless network.
FIG. 3 is a schematic diagram of a modem controller.
FIG. 4 is a flowchart depicting a method of managing transmission of data across a communication system.
FIG. 5 is a flowchart depicting another method of managing transmission of data across the communication system.

### DETAILED DESCRIPTION OF EXAMPLE EMBODIMENTS

In one aspect, disclosed is a method of managing transmission of data between a hub and a receiver, the hub connected to the receiver by a first transport medium, and the hub connected to the receiver by a wireless network, the method comprising receiving a request from the receiver to transmit data upstream; determining that the data transmission across the first transport medium is congested; and, in response to determining that the data transmission across the first transport medium congested, instructing the receiver to transmit data upstream on the wireless network.

In some embodiments, before instructing the receiver to transmit data upstream on the wireless network, determining that the data transmission across the wireless network is not congested.

In some embodiments, determining that the data transmission across the wireless network is not congested comprises determining that the rate of data transmission from the wireless network to the hub is below a predetermined threshold.

In some embodiments, determining that the data transmission across the wireless network is not congested comprises determining that the rate of data transmission between the hub and receiver across the wireless network is below a predetermined threshold.

In some embodiments, determining that the first transport medium is congested comprises determining that a rate of data transmission across the first transport medium from the receiver is greater than a predetermined upstream threshold.

In some embodiments, the method may further include: determining that the rate of data transmission across the first transport medium from the receiver is less than a predetermined upstream threshold and instructing the receiver to transmit data upstream across the first transport medium to the hub.

In some embodiments, the method may further include: receiving data to transmit downstream to the receiver; determining that the rate of data transmission across the first transport medium to the receiver is greater than a predetermined downstream threshold; and transmitting the received data downstream to the receiver on the wireless network.

In some embodiments, the method may further include: receiving data to transmit downstream; determining that the rate of data transmission across the first transport medium to the receiver is less than a predetermined downstream threshold; and transmitting the received data downstream to the receiver across the first transport medium.

In some embodiments, instructing the receiver comprises transmitting instructions to the receiver across the wireless network.

In some embodiments, instructing the receiver comprises: creating a map, the map comprising a schedule of data transmission; and transmitting the map to the receiver.

In some embodiments, the schedule of data transmission comprises an identification of a time and path for transmitting at least one data packet.

In some embodiments, the data comprises at least one IP flow, and wherein the map identifies a path onto which the at least one IP flow is to be transmitted, the IP flow comprising related data packets.

In some embodiments, each data packet in an IP flow is instructed to be transmitted on the same path.

In some embodiments, the path comprises one of the wireless network and the first transport medium between the receiver and hub.

In accordance with another aspect, disclosed is a modem controller for managing transmission of data between a hub and a receiver, the modem controller being associated with the hub, the modem controller connected to the receiver by a first transport medium, and the modem controller connected to the receiver by a wireless network, the modem controller configured to perform one or more of the methods described herein.

In accordance with another aspect, disclosed is a modem controller for managing transmission of data between a hub and a receiver, the modem controller being associated with the hub, the modem controller connected to the receiver by a first transport medium, and the modem controller connected to the receiver by a wireless network, the modem controller configured to: receive a request from a receiver to transmit data upstream; determine that the rate of data transmission across the first transport medium from the receiver is greater than a predetermined upstream threshold; in response to determining that the rate of data transmission across the first transport medium from the receiver is greater than the predetermined upstream threshold, instructing the receiver to transmit data upstream on the wireless network.

Other example embodiments of the present disclosure will be apparent to those of ordinary skill in the art from a review of the following detailed description in conjunction with the drawings.

### Exemplary Communication System

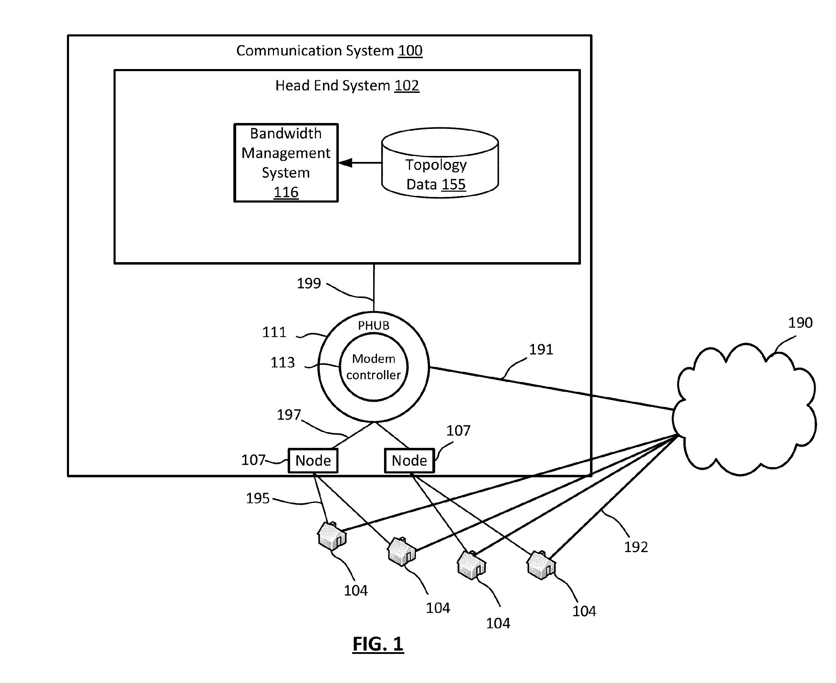

Figure 1 is a block diagram of an exemplary communication system 100.

The communication system 100 is configured to manage the transmission of data between a content source system and a content destination system. In one or more embodiments, the content source system can itself be a content destination system. In other words the content source system can be configured to receive data transmissions.

Further, the communication system 100 may be configured to manage the transmission of different formats of data between content destination systems and content source systems. For example, the communication system 100 may include a broadband network capable of transmitting multiple formats of digital data across multiple transmission channels.

In the example embodiment illustrated, the system from which content is delivered (i.e. the content source system) is referred to as a head end system 102 and the system receiving the content (i.e. the content destination system) for presentation on a media player (such as a television), is referred to as a receiver 104, an end user device or Customer Premises Equipment (CPE). In an alternative embodiment, data may be transmitted from a receiver 104 to or through the head end system 102 and (optionally) to another receiver 104 or to another content destination system. A content destination system can be a server for example. In one or more embodiments, the receiver 104 may be a modem (e.g. a hybrid cable-wireless modem) connected to a local area network ("LAN"). For example, the receiver 104 may be configured to receive data packets and forward them to the appropriate component (e.g. personal computer, smartphone, electronic device, etc.).

In at least some example embodiments, the communication system 100 is a cable television system which delivers television content such as broadcast television shows. In at least some example embodiments, the communication system 100 is an Internet access service which provides access to the Internet (including downloading and uploading content to or from the Internet).

The receivers 104 are typically located in a location associated with a subscriber such as, for example, the home of a subscriber. Accordingly, in at least some example embodiments, the receivers 104 may be referred to as Customer Premises Equipment (CPE). A receiver 104 may be connected to a media player, such as a television, on which content received at the receiver 104 may be displayed. In at least some example embodiments, a receiver 104, or parts thereof, may be internal to a media player (e.g. the television). For example, a receiver 104 may be a component of a television which is included in the television at the time of manufacture. In other embodiments, a receiver 104 may be an external receiver 104 which is connected to the media player (e.g. the television) through a wired or wireless transport medium.

The receivers 104 are illustrated in FIG. 1 using houses to illustrate that the receivers 104 may be distributed among different households associated with different subscribers. However, it will be appreciated that a single household may, in some embodiments, include multiple receivers 104 and that receivers 104 need not, in all embodiments, be located within houses.

One or more of the receivers 104 which are serviced by the communication system 100 may, in at least some example embodiments, be a set top box. A set top box is a device which connects to a television (or other display) and an external source of signal, turning the signal into content which may be displayed on the television (or other display). The term set top box includes devices which do not, necessarily, sit on top of a television. That is, the term set top box may refer to any device which is external to a television (or other display) and which receives an external signal, turns the signal into content and displays the signal on the display.

The receivers 104 may also take other forms including, for example, a gaming console, a cable card, a personal computer, a tablet device, a smartphone, etc. The receivers 104 may be any electronic devices at which content from a head end system 102 may be received.

In one or more embodiments, the receivers 104 can comprise one or more modems. For example, each receiver 104 may be connected to a Local Area Network (LAN) onto which one or more electronic devices are attached (e.g. PC, tablet computer, smartphone, etc.). The receivers 104 may receive (or send) transmitted data destined for an electronic device associated with the LAN. By way of further example, a receiver 104 can comprise a cable modem, a LTE ("long term evolution") modem and a network component to manage data transmission for both of the modems. By way of further example, the receiver 104 can comprise a hybrid modem that can receive data from and can transmit data to a wireless network 190 and a wired network. The receivers 104 can transmit data to and receive data transmissions from the wireless network 190 across transport medium 192. Similarly, data transmissions between the wireless network 190 and the hub 111 can occur on the transport medium 191.

The receivers 104 are connected to the head end system 102 through transport mediums 195, 197, 199. In the embodiment illustrated, the communication system 100 can be a content delivery system which delivers content to the receivers 104 over wired transport mediums 195, 197, 199 or over the wireless network 190 or both; or the communication system 100 can be a content transmission system which manages or provides for the transmission of content between receivers 104 and the head end 102 or between multiple receivers 104 over wired transport mediums 195, 197, 199 or over the wireless network 190 or both. The wired transport mediums 195, 197, 199 may include cables. The wired transport mediums 195, 197, 199 may, in various embodiments, include copper, or other wires, such as coaxial cable and/or may include an optical transport medium, such as fibre optic cables. The wired transport medium 195 may be a hybrid fibre coaxial cable, for example.

As illustrated in FIG. 1, the head end system 102 may not be connected directly to the receivers 104. In at least some embodiments, one or more intermediary systems or devices may facilitate the transmission of content between the head end system 102 to the receivers 104. For example, in at least some embodiments, a hub 111 (which may also be referred to as a distribution hub) may connect to the head end system 102. The hub 111 may be connected to the head end system 102 through a transport medium 199. In at least some embodiments, the transport medium 199 connecting the head end system 102 to the hub 111 may be a high bandwidth transport medium, such as a fibre cable.

In the example embodiment illustrated, the communication system 100 includes one hub 111. However, in other embodiments, the communication system 100 may include a different number of hubs (e.g. a plurality of hubs). The exact number of hubs in the communication system 100 will depend, in part, on the number of receivers 104 serviced by the communication system 100. In the example embodiment illustrated, the hubs 111 are primary hubs (PHUB). A primary hub is a location from which a content delivery service may be delivered from or from which data transmissions between receivers 104 can be managed.

Each hub 111 may service a set of nodes 107. That is, each hub 111 may function to deliver content to a specific node 107, or set of nodes 107. Further, each hub 111 may facilitate the transfer of data from a specific node 107. In the example embodiment illustrated, the hub 111 is connected to and services two nodes 107. However, in practice, the number of nodes serviced by each hub 111 may be much greater. Transport mediums 197 may connect the hubs 111 to the nodes 107. In at least some embodiments, the transport mediums 197 connecting the hubs 111 to the nodes 107 are high bandwidth transport mediums, such as a fibre cables or hybrid fibre coaxial cables. In one or more embodiments, the nodes 107 and the transport mediums 195, 197 connecting the receivers 104 to the nodes and the nodes 107 to the hub 111 may be a Hybrid Fiber coax (HFC) network. In one or more embodiments, the transport medium 197 connecting the hubs 111 to the nodes 107 may be fibre and the transport medium 195 between the nodes 107 and the receivers 104 may be coax cable. The resulting nodes 107 and transport mediums 195, 197 may be identified as an HFC network. One or more receivers 104 may also be connected to the hub 111 through the wireless network 190 by way of transport mediums 192 and 191.

Each node 107 may be connected to a set of receivers 104. That is, each node 107 may deliver content received from the head end system 102 (via the hub 111) to one or more of the receivers 104 connected to that node 107 and vice versa. In the example embodiment illustrated, there are two receivers connected to each node 107. However, in practice, the number of receivers 104 connected to the nodes 107 may be much greater. Each node 107 may service receivers 104 in a specific geographic area for example.

Transport mediums 195 may connect the nodes 107 to the receivers 104. The transport mediums connecting the nodes 107 to the receivers 104 may include high bandwidth transport mediums, such as copper cable (e.g. coaxial cable). As noted, the transport mediums 195 connecting the nodes 107 to the receivers 104 may form part of the hybrid fibre-coaxial network.

Various components of the communication system 100 and the receivers 104 may define a topology for the communication system 100. The topology for the communication system 100 defines the form of interconnections of the components of the communication system 100 and the receivers 104. That is, the term topology is used to describe the manner by which a receiver 104 connects to communication system 100 to receive or transmit content or data. Each receiver 104 may connect to the head end system 102 via a specific hub 111, a specific modem controller 113 (the modem controller 113 will be described below), and either a specific node 107 or through the wireless network 190. These specific connections define the topology of the communication system 100. In at least some embodiments, the communication system 100 may track this topology. For example, the communication system 100 may, in at least some embodiments, obtain topology data 155 specifying specific components (e.g. the specific nodes 107 and/or hubs 111 and/or modem controllers 113) which can connect a receiver 104 to the head end system 102. For example, the topology data 155 may specify the path between the head end system 102 and each receiver 104 as provided by the communication system 100.

The topology data 155 may be stored in memory of the communication system 100. In some example embodiments, the memory includes non-volatile memory, such as flash memory. In at least some example embodiments, the memory includes a solid state drive (SSD) and/or a magnetic storage, such as a hard disk drive (HDD). Other types of memory may be used instead of or in addition to those listed above. In the example embodiment illustrated, the topology data 155 is stored in memory of the head end system 102. However, in other embodiments, the topology data 155 may be stored elsewhere.

In at least some embodiments, the topology data 155 may be automatically generated. For example, the topology data 155 may be generated by sending data from the head end system 102 to a receiver 104 and by tracking the components which are used in the transmission of the data. Other methods of generating the topology data 155 may be used in other embodiments. The topology data 155 may be repeatedly updated to account for receivers 104 brought online or offline in the communication system 100.

The communication system 100 may include one or more modem controllers 113. The modem controllers 113 may be located in the head end system 102 and/or in a hub 111 (such as a primary hub (PHUB) and/or a secondary hub (SHUB)). In the embodiment illustrated, the modem controller 113 is located in the hub 111. In some embodiments, modem controllers 113 may be in more than one hub 111 or in each hub 111.

In at least one embodiment, the modem controllers 113 are Converged Cable Access Platforms (CCAP). The CCAP may include a Cable Modem Termination System (CMTS). In at least some embodiments, the modem controllers 113 are themselves CMTSs. A CMTS can be a component which is used to provide high speed data services to cable subscribers. In the example embodiment illustrated, the CMTS is used to provide high speed content delivery services. That is, the CMTS is used to transmit data or to deliver content, such as television programming, to the receivers 104. By way of further example, the CMTS enables cable modems to connect with an IP network to reach the Internet. Further the CMTS may be configured to receive data transmitted from the receivers 104. More particularly, the CMTS is configured to service a specific set of nodes (i.e. to send content to those nodes), thereby servicing the receivers connected to those nodes. Data received at the CMTS (or modem controller 113) or the hub 111 from the receiver 104 is considered to be transmitted "upstream" and data that is transmitted from the CMTS (or modem controller 113) to the receiver 104 is considered to be transmitted "downstream." Similarly, data that that is transmitted from the hub 111 to the receiver 104 is considered to be transmitted "downstream."

In one or more embodiments, the modem controller 113 may be used to provide multiple services to subscribers. For example, the CMTS and/or the CCAP may be used by a multiple system operator to provide a plurality of services, such as data (e.g. Internet), voice (e.g. phone), and/or video (e.g. television) services to subscribers. In at least some embodiments, the communication system 100 may be configured to deliver services or to manage data transmission in accordance with a Data Over Cable Service Interface Specification (DOCSIS). DOCSIS is an international telecommunications standard that permits high-speed data transfer to occur over cable TV (CATV) infrastructure. For example, the communication system 100 may be configured to manage the transmission of data according to DOCSIS version 3.0. Accordingly, in at least some embodiments, the CMTS and/or the CCAP (or the modem controller 113) may be configured to operate according to a DOCSIS specification.

The head end system 102 and the receivers 104 are configured to permit downstream communications to the receivers 104 through respective transport mediums and protocols. For example, the head end system 102 and the receivers 104 are configured to permit content, such as television content, to be delivered to the receivers 104 for display on media players (such as a television) associated with respective receivers. Where the communication system 100 includes a television system (e.g. such as a cable television system), the head end system 102 may deliver content to the receiver 104 through the wired transport mediums 195, 197, 199 or through both the wired transport medium 195 and the wireless communication network 190.

In at least some example embodiments, the communication system 100 may be configured to control the allocation of fixed resources, such as bandwidth in the communication system 100. In order to manage bandwidth, the communication system 100 may include one or more bandwidth management systems 116 which are configured to manage bandwidth in the communication system 100. The bandwidth management system 116 may also be referred to as resource management systems.

In the example embodiment of FIG. 1, the bandwidth management system 116 is included in the head end system 102. However, the bandwidth management system 116 could, in other embodiments, be included in or associated with other components of the communication system 100. In some embodiments, bandwidth management systems 116 are included in the modem controllers 113.

In at least some embodiments, a bandwidth management system 116 may be configured to manage bandwidth between the modem controllers 113 (such as a CMTS) and the nodes 107. In at least some embodiments, the bandwidth management system 116 allocates a predetermined number of transmission channels for each modem controller 113 as multi-node transmission channels. Each multi-node transmission channel is configured to distribute content simultaneously to a plurality of nodes. In at least some embodiments, each multi-node transmission channel of the modem controller is configured to deliver content to all nodes connected to that modem controller 113. That is, the multi-node transmission channels of the modem controller 113 is used to broadcast content to all nodes connected to the modem controller 113. The multi-node transmission channel is a transmission channel which may be accessed by all nodes connected to that modem controller. In at least some embodiments, four transmission channels of each modem controller 113 are allocated as multi-node transmission channels.

Similarly, the bandwidth management system 116 allocates some transmission channels of the modem controller 113 as single-node transmission channels. Each single-node transmission channel is configured to distribute content from the modem controller 113 to a single node 107 connected to that modem controller 113. That is, each single-node transmission channel is used for transmitting content to a specific node 107 (and is not used for transmitting content to other nodes 107). A single-node transmission channel is reserved for a specific node and is always used for transmitting content to that node. In at least some embodiments, the modem controller 113 allocates a common number of single-node transmission channels for each node 107 to ensure that all nodes 107 have equal access to content. In at least some embodiments, each node 107 is allocated three single-node transmission channels. However, the nodes 107 may be allocated a different number of transmission channels in other embodiments.

The bandwidth management system 116 is configured to select content for transmission in the multi-node transmission channels based on usage data. That is, the bandwidth management system 116 is configured to use multi-node transmission channels to deliver content which is relatively more popular and to use the single-node transmission channels to deliver content which is relatively less popular.

In at least some example embodiments, the communication system 100 provides for upstream communications from one or more of the receivers 104 to the head end system 102 (and/or other components of the communication system 100). In at least some example embodiments, upstream communications (i.e. communications originating from a receiver 104 which are sent to the head end system 102) may operate on the same transport mediums 191, 192, 195, 197, 199 (including the wireless network 190) and/or transport protocol as the downstream communications (downstream communications are communications originating from the head end system 102 which are sent to one or more receiver 104). For example, in a wired television system, such as a cable television system, communications originating from a receiver 104 may be sent to the head end system 102 through the wired transport mediums 195, 197, 199.

Accordingly, the head end system 102 and the receivers 104 used in the communication systems 100 provide for downstream communications from the head end system 102 to the receivers 104 and may, in at least some example embodiments, provide upstream communications from the receivers 104 to the head end system 102. Such upstream communications may permit the receivers 104 to communicate with the head end system 102. Such upstream communications may, for example, be useful to provide on-demand services to a receiver 104, such as video on-demand services (which may be used to deliver specific video content on request), audio on-demand services (which may be used to deliver specific audio content on request) or application on-demand services (which may be used to deliver specific applications on request) to a receiver 104. Such upstream communications may also provide Internet access services.

By way of further example, the modem controller 113 or another component in the hub 111 can monitor the rate of upstream data transmission from each node 107 across the transport medium 197. Similarly, the modem controller 113 or another component of the hub 111 can monitor the rate of downstream data transmission to each node 107 across the transport medium 197. Similarly, the PDN GW 206 serves to monitor upstream and downstream data transmissions over the wireless network 190.

In accordance with another embodiment, the modem controller 113 or another component can monitor the rate of upstream data transmission from the wireless network 190 originating from each node 107. Similarly, the modem controller 113 or another component of the hub 111 can monitor the rate of downstream data transmission to each receiver 104 and/or node 107. By way of further example, the modem controller 113 and/or one or more other components associated with the hub 111 can monitor the transmission of data to or from one or more receiver 104 over either or both of the wireless network 190 and anther transport medium (such as transport medium 197 or a network, such as a cable network that includes the transport medium 197).

In accordance with another embodiment, the PDN GW 206 or another component can monitor the rate of upstream data transmission from the wireless network 190 originating from each node 107 and communicate this information to the modem controller 113, either directly or via the PCRF 204. Similarly, the PDN-GW 206 or another component of the hub 111 can monitor the rate of downstream data transmission to each receiver 104 and/or node 107 and deliver this information to the modem controller 113.

The communication system 100 and/or any of the components, features or systems of the communication system 100 discussed herein, in at least some embodiments, include one or more processors and one or more memory elements storing computer executable instructions. In at least some embodiments, the communication system 100 and/or any of the components, features or systems of the communication system 100 may operate under stored program control and execute the computer executable instructions stored on the memory element(s). In at least some embodiments, the bandwidth management system 116 is provided by a processor which executes computer executable instructions.

Furthermore, any of the features of any of the systems included in the head end system 102 may be provided by other systems of the head end system 102 and any one or more of these features may be provided by other systems or subsystems of the head end system 102 not specifically discussed herein. More particularly, the head end system 102 may not be physically or logically divided in the manner illustrated in FIG. 1. In at least some embodiments, components of the head end system 102 may be physically or logically separated from one another. In at least some embodiments, the head end system 102 may be physically separated and may, for example, include a super head end system and one or more regional or local head end systems. The super head end system and/or the regional or local head end systems may separately or collectively perform some of the functions described above with reference to FIG. 1.

In at least some example embodiments, the head end system 102 may be a modular solution in which various functions or features described herein are provided by various modules. Such modules may, for example, be rack mounted electrical devices and may interconnect with one another to collectively provide functions and features described herein. In at least some embodiments, one or more of the modules, features, systems or subsystems described herein may contain one or more processors and a memory having computer readable instructions stored thereon. The computer readable instructions may be executable by the processors and may cause the processors to provide functions described herein.

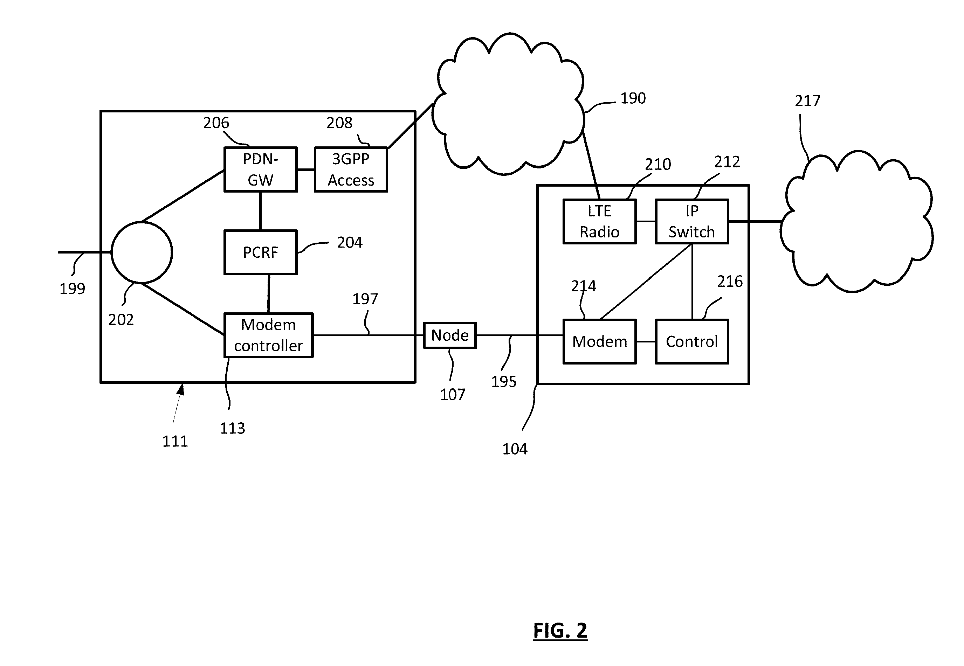

Figure 2 shows a detailed view of an exemplary hub 111 and receiver 104 in accordance with at least one embodiment. The hub 111 includes a modem controller 113, which in the illustrated embodiment is a CCAP 113, a Policy, Charging and Rules Function (PCRF) component 204, a router 202, a public data network gateway (PDN-GW) 206 and a 3GPP Access component 208. One or more other components used in the operation of a communications network may be included in the hub 11 or receiver 104.

As noted above, the modem controller 113 can include a CMTS. The CMTS is a component that is used to provide high speed data services to cable subscribers. The CMTS (or the CCAP) can be used to provide high speed content delivery services. That is, the CMTS is used to deliver content, such as television programming, to the receivers 104. The modem controller 113 may be configured to transmit data to the node 107. Similarly, the modem controller 113 may be configured to receive data transmitted from the node 107. More generally, each modem controller 113 may be configured to transmit and receive data from one or more specific nodes 107.

The PCRF component 204 manages data transmission bandwidth resources of the wireless network in real-time. In accordance with an embodiment, the PCRF component 204 is a software module that manages policy rules in a multimedia network. The PCRF component 204 may be implemented in the modem controller 113 or may be a stand-alone component. For example, the PCRF component 204 can monitor the capacity of the wireless network 190. By way of further example, the PCRF component 204 can detect the rate of data transmission across the PDN-GW 206. The PCRF component 204 may also include a Quality of Service (QoS) component (not shown).

The modem controller 113 is configured to interact with the PCRF component 204. For example, the modem controller 113 may transmit data to the PCRF component 204 and the PCRF component 204 may transmit data to the modem controller 113. For example, the modem controller 113 may receive information from the PCRF component 204 concerning the capacity of the wireless network 190. The modem controller 113 will be described in more detail below.

In one or more embodiments, the PCRF component 204 manages the wireless bandwidth allocation for one or more receivers 104. For example, the PCRF component 204 may receive a map from the modem controller 113. The map may include scheduling information that provides a schedule of data transmission over the wireless network 190. In one or more embodiments, the PDN-GW 206 may implement the wireless data transmission schedule received from a PCRF 204. In one or more embodiments, there may be an additional component associated with the modem controller 113 that manages or creates the map.

In one or more embodiments the communication system may use queues for different classes of data traffic. The scheduling information may include one or more queues. For example, both wired and wireless networks may use queues to manage data transmissions. By way of further example, video and voice may be given higher priority than other types of data such as web pages or text. In other words, a queue dedicated to only voice data may be given higher priority for transmission than a queue dedicated to other types of data. The CMTS may schedule transmissions based on queue lengths and relative data traffic priorities. Queues may contain data frames in which data packets can be scheduled for delivery or transmission (downstream or upstream). For example, data frames may be placed in the appropriate queue for a scheduled transmission. When all queues are empty, idle (or stuffing) frames may be scheduled for downstream data transmission. By scheduling data frames for transmission, a continuous bit stream may be maintained to synchronize the receiver 104 or to maintain the link with the receiver 104. In the upstream direction, one or more receivers 104 may be scheduled to transmit a data burst based on bandwidth requests it has sent to the CMTS. If no receiver 104 requests to transmit data upstream, the wired or wireless channel (as the case may be) is unoccupied with any signals.

In one or more embodiments, upstream transmissions may be at frequencies between 5 megahertz and 42 megahertz. In one or more embodiments, downstream transmissions may be above 50 megahertz. For example, downstream transmissions may be above 50 megahertz and up to 800 megahertz. The upstream transmissions may implement time-division sharing with common frequencies.

It is understood that eNodeB may be a component associated with the 3GPP Access 208 that may operate similarly to the CMTS for the wireless network 190.

The router 202 receives incoming data transmissions (i.e. along transport medium 199) and directs the data packets to either the modem controller 113 or the PDN-GW 206. As described above, the modem controller 113 may be or may be associated with a CCAP or a CMTS. As noted above, the data may be transmitted in accordance with an IP network or in accordance with the TCP/IP protocol. In such an embodiment, each data packet may be directed to its destination via a unique IP address (e.g. in accordance with IPv6 or a 12-digit number in accordance with IPv4). The router 202 may direct the data packets according the IP address in accordance with routing tables contained in the routers 202. However, in accordance with one or more methods described herein, the data packets may be sent on a different path from the directions indicated in the routing tables.

Similarly, upstream data transmitted from the wireless network 190 through the PDN-GW 206 can then be transmitted to the router 202. The router 202 can then transmit the data to the head end 102 along transport medium 199.

3GPP (third generation partnership project) is a wireless industry standards organization that develops and maintains wireless network access technologies. The 3GPP access component 208 can include an eNodeB radio and/or antenna and any other components or functional elements identified by the 3GPP for accessing the wireless network 190. The PDN-GW 206 provides connectivity between the equipment in the hub 111 and external packet data networks, such as the internet or another wireless network 190. The PDN-GW 206 is connected to the router 202 so as to receive and transmit data (or data packets) therebetween. In one or more other embodiments, there may be alternative components that provide access to the wireless network 190.

With continued reference to the embodiment shown in Figure 2, the receiver 104 can be a hybrid cable-wireless modem. The receiver in Figure 2 includes an LTE radio 210 an IP switch 212 a modem 214 (e.g. a modem compatible with a DOCSIS 3.1) and a control 216. The LTE radio 210 can be connected to the modem 214 and/or the IP switch 212. The control 216 can be connected to the modem 214 and/or IP switch. In one or more embodiments, the LTE radio 210 may be in a different physical component than the modem 214.

The LTE radio 210 can include one or more antennas configured to receive and transmit radio frequency signals. For example, the LTE radio 210 may receive data from the wireless network 190. By way of further example, the LTE radio 210 may receive data from the hub 111 transmitted through the wireless network 190. Data received at the LTE radio 210 may be transmitted to the IP switch 212 en route to a destination component. The data may be transmitted using the TCP/IP protocol. It is understood that LTE is an example system and that other wireless systems could be implemented instead.

The IP switch 212 is a component that can link data between one or more networks For example, the IP switch 212 may be connected to a LAN 217 and to the wireless network 190 (through the LTE radio 210). The IP switch 212 may be configured to receive data transmitted over the wireless network 190 or a wired network (such as through transport mediums 197, 195 and the node 107) and to route the received data to a network component on the local area network (LAN) 217. The network component that receives the transmitted data can be a user device such as a tablet, television, computer, smartphone or other such electronic device. The network component that receives the transmitted data can be a network component that request a data download, for example. By way of further example, the data may indicate destination identity (e.g. IP address) of a network component and the IP switch 212 may transmit the received data to the network component identified in the data.

In one or more embodiments, the modem 214 is a cable modem configured to receive and transmit data communications on the transport medium 195. For example, the modem 214 may be configured to receive and transmit data using the TCP/IP network protocol. By way of further example, the modem 214 may be a DOCSIS 3.1 compatible modem. In other words, the modem 214 may be configured to operate in each of the DOCSIS 3.1 and DOCSIS 3.0 standards.

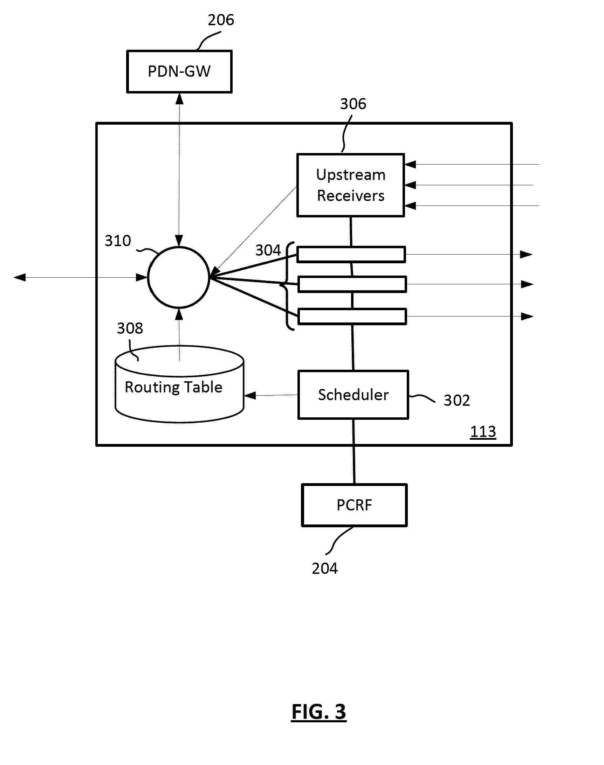

Figure 3 shows a detailed view of the modem controller 113. In accordance with the illustrated embodiment, the modem controller 113 comprises a scheduler 302, a routing table 308, a router 310, upstream receivers 306 and radio frequency (RF) modulators 304. The RF modulators 304 may also be called Quadrature Amplitude Modulation ("QAM") transmitters 304. In other embodiments, one or more of the functional features of the modem controller 113 may be implemented on components physically separate from the modem controller 113. The QAM transmitters 304 may be configured to transmit signals in accordance with a QAM format. QAM is a modulation format which does not specify the format of the digital data being carried. By way of further example, the communication system 100 may be configured to use QAM modulation on transmitted data.

The modem controller 113 is configured to manage the transmission of data between the hub 111 and at least one receiver 104. The modem controller 113 is associated with the hub 111 and may be a component of the hub 111. By way of further example, the modem controller 113 may receive data transmitted to the hub 111. The modem controller 113 may also be configured to manage the data transmission to and from the hub 111. For example, the modem controller can manage data transmissions from the hub 111 along transport medium 197. Similarly, the modem controller 113 can receive data transmitted to the hub 111 along transport medium 197. The modem controller 113 is connected to the receiver 104 by a transport medium (such as transport mediums 195, 197 or a cable or a hybrid fibre coaxial network) for transmitting data therebetween.

With reference to the illustrated embodiments, the modem controller 113 is connected to the receiver 104 by the wireless network 190. For example, the modem controller 113 may be connected to the wireless network 190 through the PCRF 204 and the PDN-GW 206 (or another gateway).

With reference to the embodiment shown in Figure 3, the modulators 304 (also called cable destination modulators) may be configured to transport data over the transport medium 197 (or cable) to the receiver 104. The upstream receivers 306 are configured to receive data transmitted upstream from the receiver 104 across the transport medium 197. The upstream receivers 306 may also be configured to receive requests from the receivers 104. For example, the requests may be requests to transmit data upstream from the receiver 104 to the hub 111. The transport mediums 197, 195 may be cables or wires or optical fibres, for example.

The routing table 308 comprises a data storage (e.g. memory) associated with the hub 111. The routing table 308 may include information concerning the pathways or routes defining the topology associated with the hub 111. The router 310 is configured to transmit data packets to one or more devices (e.g. the receivers 104) via a path or communications network. In one or more embodiments the router 310 uses the routing table 308 to determine which downstream node should be used to reach the receiver 104 in order to pass packets destined for that receiver 104. The routing table 308 may define for each destination IP address identity in each data packet which output port to use. The router 310 may then uses this information (i.e. the identity of the output port) to connect a path for the packet between any input port to the appropriate output port. By way of further example, in a CMTS each QAM transmitter 304 can represent a unique output port for routing purposes. There may be several QAM transmitters 304 connected to each node 107 in which case the downstream scheduler in the CMTS may decide which QAM transmitter to use for a packet in accordance with a load balancing algorithm provided by the CMTS vendor. The router 310 may also be connected to the QAM transmitters 304.

In one or more embodiments, the scheduler 302 is a cable modem bandwidth scheduler. The scheduler 302 is configured to control the connections to the LTE basestations and the DOCSIS cable modems. The scheduler 302 can be connected to the modulators 304 and the upstream receivers 306, for example, in order to receive or pass data (such as instructions) therebetween. The scheduler 302 can manage the cable modem bandwidth resources. For example, if the scheduler 302 determines that the transport medium 197 (or the HFC network between the hub 111 and receivers 104) is congested it can schedule 302 data to be transmitted on the wireless network 190 instead.

In accordance with an embodiment, the scheduler 302 can determine if the transport medium 197 (or cable or other wired medium) between the modem controller 113 and receiver(s) 104 is congested by monitoring the rate of data transmission of one or both of the upstream transmission to the modem controller 113 from the receiver(s) 104 and the downstream transmission from the modem controller 113 to the receiver(s) 104. For example, the scheduler may be in communication with one or both of the upstream receivers 306 and the modulators 304 to determine the rate of data transmission. In one or more embodiments, the scheduler 302 may maintain its own schedule of upstream data transmission or downstream data transmission across the transport medium 197 from which it can determine the data transmission congestions (or the rate or volume of data transmitted across the cable). It is understood that the scheduler 302 may include or be connected to or associate with a memory or a processor or both.

In accordance with an embodiment, the scheduler 302 transmits data to the receiver 104 which instructs the receiver 104 which path to send data packets across to the hub 111. For example, the scheduler may create a map that comprises a schedule of data transmission. The schedule of data transmission can include a schedule of timeslots and paths for upcoming data packets to be transmitted upstream from the receiver 104 to the hub 111. The paths can include the wireless network 190 or the transport medium(s) 197 between the hub 111 and the receiver 104 (e.g. an HFC network).

### Exemplary Method of Managing Data Transmission

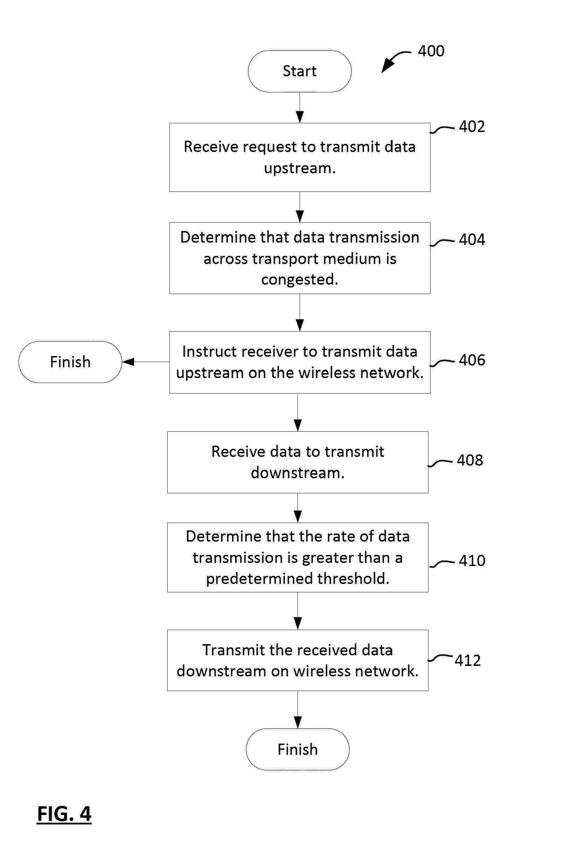

Figure 4 is a flow chart depicting a method of managing data transmission between a hub 111 and a receiver 104. The hub 111 is connected to the receiver 104 by a cable. The cable can be the transport medium 195, 197, for example. The hub 111 may be connected to a plurality of receivers 104 through one or more cables, in which case the one or more cables may be configured as a HFC (hybrid fibre coaxial) network. The hub 111 is also connected to the receiver 104 by a wireless network 190. In one or more embodiments, the hub 111, receiver 104, cable and wireless connection 190 are as depicted in figures 1 to 3. The hub 111 can include a modem controller 113 such as, for example, a CCAP or a CMTS. In one or more embodiments, the method 400 (or elements of the method) can be implemented on a component associated with the modem controller 113 such as the scheduler 302.

At 402 a request is received from the receiver 104 to transmit data upstream. The receiver 104 can be hybrid modem, such as that depicted in Figure 2. By way of example, the receiver 104 may include a cable modem 214, an LTE radio 210 and a control 216. In one or more embodiments, the receiver 104 may receive instructions from user equipment (e.g. a computer, smartphone or other electronic device) to transmit data upstream. Upon receiving such instruction the receiver 104 may then send the request (at 402) to transmit data upstream. The instructions received at the receiver 104 from the user equipment may consist of instructions to upload content (or data) to a remote server or may consist of instructions to transmit an electronic message to another receiver 104 or some other destination on the Internet, for example.

The request to transmit data upstream may be received from the receiver 104 at the hub 111. More specifically, the request to transmit data upstream may be received from the receiver 104 at the modem controller 113 associated with the hub 111, which may include a CMTS or CCAP for example. For example, the request may be transmitted along transport medium 195 to node 107 and along transport medium 197 to the modem controller 113 (or over an HFC network between the receiver 107 and hub 111). The modem controller 113 may be configured to receive requests from a plurality of receivers 104. In one or more embodiments, the request contains identification data that identifies the receiver 104 that sent the request. In one or more embodiments, the request may comprise other information about the data, such as quantity, type, destination, etc. The request may be transmitted in accordance with the TCP/IP protocol.

In one or more embodiments, it is a component of the receiver 104 that transmits the request to the hub 111. For example, in the embodiments depicted in Figure 2, the modem 214 (e.g. a cable modem) may transmit the request to the modem controller 113 (or CCAP for example) along transport mediums 195, 197 (and through node 107). Alternatively it may be the LTE radio 210 that transmits the request to the hub 111 (and then the modem controller 113) along wireless network 190. The request may be received at the modem controller 113.

At 404 it is determined that the data transmission across the first transport medium is congested. For example, it may be determined that the rate of data transmission between across the first transport medium from the receiver 104 is greater than a predetermined upstream threshold. The rate of data transmission across the first transport medium from the receiver 104 may be the rate of data transmission passing through node 107 in the upstream direction. The first transport medium may be can be one of a cable or a hybrid fibre coaxial cable, for example. By way of further example, the first transport medium can be the transport medium 197. Further, the transport medium can consist of the transport medium 197, the node 107 and the transport medium 195. In yet a further example, the first transport medium can be a hybrid fibre coaxial network between the receiver 107 and the hub 111.

In one or more embodiments, the rate of data transmission may be the volume of data received at the modem controller 113 in a unit of time from the receiver 104 that sent the request. In one or more embodiments, the rate of data transmission may be the volume of data received at the modem controller 113 in a unit of time received from one or more receivers 104. In one or more embodiments there may be multiple nodes 107 connected to the modem controller 113 (and hub 111). In such embodiments, the rate of data transmission may be the amount of data received at the modem controller 113 from all of the nodes 107 attached to that modem controller 113 (e.g. by transport mediums 197). Similarly, the rate of data transmission may be the amount or volume of data received at the modem controller 113 from all of the receivers 104 connected (via cables or the HFC network) to the hub 111. For example, the rate of data transmission across the first transport medium from the receiver may be the rate of data transmission received at or passing through the modem controller 113 from all transport mediums 197 that are connected to the hub 111. The rate of data transmission across the first transport medium from the receiver(s) 104 (e.g. along the transport medium 197 or across the HFC network) may be periodically monitored. In another embodiment, the rate of data transmission across the first transport medium from the receiver 104 may be determined in response to receiving from the receiver 104 the request to transmit data upstream.

The determination (at 404) may be performed by comparing the rate of data transmission across the first transport medium from the receiver 104 with the predetermined upstream threshold. The predetermined upstream threshold may be a threshold value stored in a memory associated with the hub 111 or with the modem controller 113. The predetermined threshold value may be a rate of data transmission above which the first transport medium (e.g. the transport medium 197 or a wire or cable) may be considered congested or clogged. For example, data transmitted across the transport medium 197 may be slowed or degraded when the rate of data being transmitted across the transport medium 197 is above the predetermined threshold. In one or more other embodiments, there are alternative methods or ways or mechanisms for determining whether the cable (e.g. the transport medium 197) is clogged or congested, which may be used in the determination (at 404). The cable or transport mediums 197, 195 may be identified as a component of a cable network or as components of a hybrid fibre coaxial network.

In one or more embodiment, determining that the rate of data transmission across the first transport medium from the receiver 104 is greater than a predetermined upstream threshold comprises determining that the volume of data passing through a network component associated with the modem controller 113 is greater than the predetermined upstream threshold. The network component may be the modem controller 113 itself, the scheduler 302 or the upstream receivers 306, for example.

Determining that the rate of data transmission across the first transport medium is congested may comprise determining that the rate of data transmission passing through the first transport medium, including data from the modem controller 113 to the receiver 104 and data from the receiver 104 to the modem controller 113, is above the predetermined upstream threshold.

The predetermined upstream threshold may be a value set by an administrator or user or may be a variable that depends on an average volume of data, for example. The predetermined threshold may be set to ensure (or at least to attempt to ensure) that unimpeded flow of data is maintained through the wired or wireless network.

In one or more embodiments, it may be determined that the rate of data transmission across the first transport medium from the receiver 104 is less than the predetermined upstream threshold. For example, it may be determined that the first transport medium is not congested. In response, to determining that the rate of data transmission across the first transport medium from the receiver 104 is less than the predetermined upstream threshold, the receiver 104 may be instructed to transmit data upstream across the first transport medium to the hub 111.

At 406, in response to determining that the rate of data transmission across the cable from the receiver 104 is greater than the predetermined upstream threshold, the receiver 104 is instructed to transmit data upstream on the wireless network 190. For example, after determining that the rate of data transmission across the first transport medium from the receiver 104 is greater than the predetermined upstream threshold, instructions may be transmitted from the modem controller 113 (or from another component associated with the hub 111, such as the scheduler 302) to the receiver 104 either across the first transport medium (i.e. through transport mediums 197, 195 and node 107) or through the wireless network 190 to transmit the data upstream on the wireless network 190.

In one or more embodiments, instructing the receiver 104 comprises creating a map and transmitting the map to the receiver 104. The map can comprise a schedule of data transmission. For example, the map may comprise instructions for the time for one or more data packets or collection of data packets. The map can be created at the scheduler 302, as described above with reference to Figure 3 and possibly in accordance with the DOCSIS specification, for example.

In one or more embodiments, the schedule of data transmission (e.g. in the map) can include an identification of a time and path of transmitting at least one data packet. The path can include a path to transmit data from the receiver 104 to the hub 111. For example, the path can be one of the wireless network 190 or the first transport medium.

The instructions may be transmitted from the modem controller 113 (or hub 111) to multiple receivers 104 at one time. For example, the scheduler 302 may create the map of data transmissions from multiple receivers 104 based on the received request and then may transmit the map to each of (or one or more of) the multiple receivers 104. The map may be configured to identify the communication network (e.g. wireless network 190 or HFC) or path onto which the at least one IP flow is to be transmitted. An IP flow is one or more related data packets. For example, an IP flow may be a collection of data packets that conforms to a certain definition. By way of further example, IP flows may be defined based on IP address and TCP port number, for example. IP flows may be further defined by the source component. For example, the IP flows may be defined by the identification of the receiver 104 transmitting the data packets. By way of further example, the IP flows may be defined by the identification of the device connected to the receiver 104 within a local area network (not shown in the Figures). The local area network 217 may be a communication network onto which the receiver 104 can transmits and/or receive data. For example, the LAN 217 may be associated with one or more consumer electronic devices (such as PCs, tablet computers, smart phones, etc.). By way of further example, data transmitted onto or received on the LAN 217 may be transmitted to or received at an intended consumer electronic device associated with the LAN 217.

In an alternative embodiment, the instructions may be transmitted to the receiver(s) 104 over the wireless network 190.

In one or more embodiments, the method may be finished after instructing the receiver 104 to transmit the data upstream on the wireless network 190.

Optionally, at 408, data may be received to be transmitted downstream. For example, data may be received at the modem controller 113 or the hub 111 from the head end 102 (through transmission medium 199 and router 202). The data may have been transmitted in response to a request from the receiver 104. For example, the data may be video, text, television content, etc. By way of further example, the data may have been transmitted in response to a download request sent from the receiver 104. The data may include destination information. For example, the data may include the identification of the receiver(s) 104 to which the data is to be transmitted or the data may include the identification of the devices downstream of the receiver 104 (e.g. on the local area network to which the receiver 104 is connected or on the home network).

At 410, it is determined that the rate of data transmission across the first transport medium to the receiver 104 is greater than a predetermined downstream threshold. The first transport medium may be considered the same as or a part of the HFC network between the hub 111 and the receiver(s) 104. For example, the modem controller 113 can monitor the rate of data transmission sent out to all the transport mediums 197 connected to it. Similarly, the modem controller 113 may monitor the rate of data transmission sent out on the HFC network. In one or more embodiments, the modem controller 113 monitors the rate of data transmissions downstream to the transport medium 197 from the hub 111 (e.g. to a receiver 104). For example, the modem controller 113 may periodically determine the rate of data transmission passing downstream of each transport medium 197 connected to the modem controller 113 and going to one or more receivers 104.

In one or more embodiment, determining that the rate of data transmission across the first transport medium to a receiver 104 is greater than a predetermined downstream threshold comprises determining that the volume of data passing through a network component associated with the modem controller 113 is greater than the predetermined downstream threshold. For example, the scheduler 302 may receive data from or may monitor data received from the hub 111 indicating a volume or rate of data transmission. Or, in an alternative embodiment, the scheduler 302 may receive data from the modulators 304 indicating the volume or rate of data transmission across the first transport medium to each receiver 104.

The predetermined downstream threshold (similarly for the predetermined upstream threshold) may be a value (e.g. a rate of data transmission) that is stored in a memory associated with the modem controller 113. In one or more embodiments, the predetermined downstream (or upstream) threshold may be a rate of data transmission on a wired network above which the wired network is considered busy or congested. In one or more embodiments, the predetermined downstream threshold or the predetermined upstream threshold can be periodically updated or set. The updating may be automatic (e.g. in response to the amount of measured data transmission over time) or manually input.

At 412, the received data is transmitted downstream to the receiver 104 using or on the wireless network 190. For example, after it is determined that the rate of data transmission across the first transport medium (or wired network) is greater than the predetermined downstream threshold, the modem controller 113 will transmit the data downstream across the wired network 190. For example, the modem controller 113 may instruct the router 202 to transmit the data from transport medium 199 to the PDN-GW 206 and on to the wireless network 190. One intention may be to avoid the congestion on the cable (or HFC network) and to take advantage of the downstream capacity on the wireless network 190. In one or more embodiments, transmitting the received data downstream to the receiver 104 over the wireless network 190 comprises transmitting the received data to a Public Data Network Gateway and wherein the received data comprises at least an address of the receiver 104. The address of the receiver 104 can be an IP address, for example.

In one or more embodiments, it may be determined that the rate of data transmission across the first transport medium to the receiver 104 is less than a predetermined downstream threshold. In other words, it may be determined that the first transport medium is not congested. In such a case, received data may be transmitted downstream to the receiver 104 across the first transport medium.

In one or more embodiments, instructing the receiver 104 can comprise creating a map and transmitting the map to the receiver. The map can comprise a schedule of data transmission. As described above, the scheduler 302 can create a map to be sent to the receiver(s) 104. The schedule of data transmission can include an identification of a time and path for transmitting at least one data packet.

In one or more embodiments, data packets may be organized or categorized into at least one IP flow. Accordingly, the IP flow can include related data packets. The map can identify a path (e.g. wireless network or HFC network) onto which the at least one IP flow is to be transmitted. The instructions can request or dictate that each data packet in a single IP flow be transmitted on the same path. For example, the path can be the wireless network 190 so that each data packet from the same IP flow is transmitted over the wireless network, or, alternatively, the path can be the first transport medium (or HFC network) so that each data packet from the same IP flow is transmitted over the first transport medium (or HFC network) between the hub 111 and receiver 104. It is understood that the receiver 104 can comprise a hybrid modem as described above.

In accordance with one or more embodiments, before instructing (at 406) the receiver 104 to transmit data upstream on the wireless network 190 it is determined that the data transmission across the wireless network 190 is not congested. For example, it may be determined that the rate of data transmission from the wireless network 190 to the hub 111 is below a predetermined threshold. Following such an embodiment, it may be that only after such a determination is the receiver instructed (at 406) to transmit the data upstream on the wireless network 190.

In a further example, before instructing (at 406) the receiver 104 to transmit data upstream on the wireless network 190 it may be determined that the data transmission across the wireless network 190 is congested. In other words it may be determined that transmission of data to a receiver 104 from the hub 111 or vice versa may be relative slow on the wireless network 190 (as compared to the transport medium, wired network or HFC network between the receiver 104 and hub 111 for example). After such a determination, the modem controller 113 (or another component associated with the hub 111) may instruct the receiver 104 to transmit the data upstream on the first transport medium.

In one or more embodiments, the receiver 104 may comprise a hybrid modem connected to both the first transport medium and the wireless network 190.

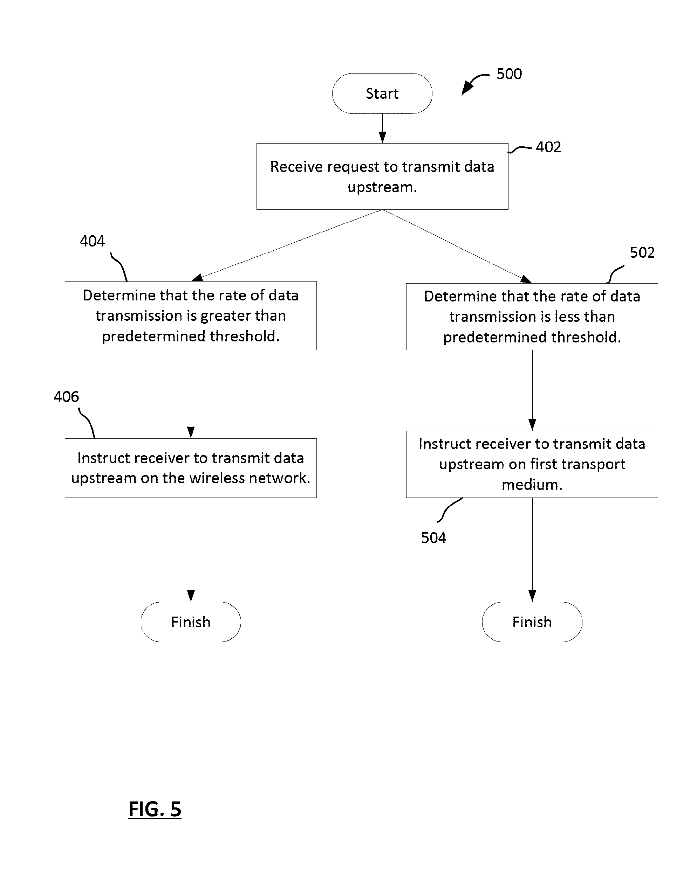

Figure 5 depicts a method 500 of managing transmission of data between a hub 111 and a receiver 104. As with the method 400 depicted in Figure 4, a request is received (at 402) from the receiver 104 to transmit data upstream, it is determined (at 404) that a rate of data transmission across the first transport medium from the receiver 104 is greater than a predetermined upstream threshold, and the receiver 104 is instructed (at 406) to transmit data upstream on the wireless network 190.

In accordance with one or more embodiments, at 502 it is determined that the rate of data transmission across the first transport medium from the receiver 104 is less than a predetermined upstream threshold. The determination (at 502) may be performed after a request is received (at 402). Alternatively, the determination (502) may be performed after the receiver 104 is instructed (at 406) to transmit data upstream on the wireless network 190.

The modem controller 113 (or another component associated with the hub 111) may be configured to measure or monitor the volume of data passing through a network component. The modem controller 113 can then determine whether the volume or amount of data passing through the network component is less than the predetermined upstream threshold. In one or more embodiments, the modem controller 113 monitors only the upstream data transmission and compares the volume of the upstream data transmission (i.e. coming from the receiver 104) to the predetermined upstream threshold. In one or more other embodiments, the modem controller 113 monitors the upstream and downstream data transmission and compares this measured volume to the predetermined upstream threshold.

At 504, the receiver 104 is instructed to transmit data upstream on the wired network. For example, in response to determining (at 502) that the rate of data transmission across the wired network (or first transport medium) is less than the predetermined upstream threshold, the modem controller 113 or another component associated with the hub 111 transmits instructions to the receiver 104 to transmit data upstream on the first transport medium (or wired network). The wired network may comprise the transport medium 195, node 107 and transport medium 197. In one or more embodiments, the instructions transmitted to the receiver 104 include a map

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method of managing transmission of data between a hub (111) and a receiver (104), the hub connected to the receiver by a first transport medium (197), and the hub connected to the receiver by a wireless network (190), the method comprising:
receiving a request from the receiver to transmit data upstream;
determining that the data transmission across the first transport medium is congested; and,
in response to determining that the data transmission across the first transport medium congested, instructing the receiver (104) to transmit data upstream on the wireless network (190).

2. The method of claim 1, further comprising, before instructing the receiver to transmit data upstream on the wireless network, determining that the data transmission across the wireless network is not congested.

3. The method of claim 2, wherein determining that the data transmission across the wireless network is not congested comprises determining that the rate of data transmission from the wireless network to the hub is below a predetermined threshold.

4. The method of any one of claims 2 to 3, wherein determining that the data transmission across the wireless network is not congested comprises determining that the rate of data transmission between the hub and receiver across the wireless network is below a predetermined threshold.

5. The method of any one of claims 1 to 4, wherein determining that the first transport medium is congested comprises determining that a rate of data transmission across the first transport medium from the receiver is greater than a predetermined upstream threshold.

6. The method of claim 5, further comprising:
determining that the rate of data transmission across the first transport medium from the receiver is less than a predetermined upstream threshold; and
instructing the receiver to transmit data upstream across the first transport medium to the hub.

7. The method of any one of claims 5 or 6, further comprising:
receiving data to transmit downstream to the receiver;
determining that the rate of data transmission across the first transport medium to the receiver is greater than a predetermined downstream threshold; and
transmitting the received data downstream to the receiver on the wireless network.

8. The method of any one of claims 5 to 6, further comprising:
receiving data to transmit downstream;
determining that the rate of data transmission across the first transport medium to the receiver is less than a predetermined downstream threshold; and
transmitting the received data downstream to the receiver across the first transport medium.

9. The method of any one of claims 1 to 8, wherein instructing the receiver comprises transmitting instructions to the receiver across the wireless network.

10. The method of claim 9, wherein instructing the receiver comprises:
creating a map, the map comprising a schedule of data transmission; and
transmitting the map to the receiver.

11. The method of claim 10, wherein the schedule of data transmission comprises an identification of a time and path for transmitting at least one data packet.

12. The method of any one of claims 10 or 11, wherein the data comprises at least one IP flow, and wherein the map identifies a path onto which the at least one IP flow is to be transmitted, the IP flow comprising related data packets.

13. The method of claim 12, wherein each data packet in an IP flow is instructed to be transmitted on the same path.

14. The method of claim 11, wherein the path comprises one of the wireless network and the first transport medium between the receiver and hub.

15. A modem controller (113) for managing transmission of data between a hub (111) and a receiver (104), the modem controller being associated with the hub, the modem controller connected to the receiver by a first transport medium, and the modem controller connected to the receiver by a wireless network, the modem controller configured to perform the method of any one of claims 1 to 14.
